(19) Europäisches Patentamt
European Patent Office
Office européen des brevets

(11) **EP 4 322 097 A1**

(12) **EUROPEAN PATENT APPLICATION**
published in accordance with Art. 153(4) EPC

(43) Date of publication:
**14.02.2024 Bulletin 2024/07**

(21) Application number: **22925970.0**

(22) Date of filing: **14.02.2022**

(51) International Patent Classification (IPC):
**G06Q 30/02** *(2023.01)*

(52) Cooperative Patent Classification (CPC):
**G06Q 30/02**

(86) International application number:
**PCT/JP2022/005602**

(87) International publication number:
**WO 2023/152950 (17.08.2023 Gazette 2023/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Rakuten Group, Inc.**
**Setagaya-ku**
**Tokyo 158-0094 (JP)**

(72) Inventor: **ISHIKAWA, Shion**
**Tokyo 158-0094 (JP)**

(74) Representative: **Hoffmann Eitle**
**Patent- und Rechtsanwälte PartmbB**
**Arabellastraße 30**
**81925 München (DE)**

(54) **INFORMATION PROCESSING DEVICE, INFORMATION PROCESSING METHOD, PROGRAM, AND LEARNING MODEL**

(57)     An information processing apparatus (100) includes: an acquisition unit configured to acquire a content-to-content similarity that is a similarity between a target content and one or more pieces of other content, and a user-to-user similarity that is a similarity between a target user and one or more other users; an estimation unit configured to estimate a prior distribution of expected rewards obtained as a result of execution processing performed by the target user on the target content, based on the content-to-content similarity and the user-to-user similarity; and a derivation unit configured to derive a posterior distribution of the expected rewards, using the prior distribution.

FIG. 6

EP 4 322 097 A1

**Description**

TECHNICAL FIELD

The present invention relates to an information processing apparatus, an information processing method, a program thereof, and a learning model, and particularly to a technique for reinforcement learning that is applicable to a recommendation system that recommends various items.

BACKGROUND ART

A recommendation system that recommends various items is known as an application field of machine learning. Conventionally, to improve the recommendation effect, such a system utilizes a method that employs collaborative filtering, in which the system determines similarity between users based on item transaction history or the like, to specify items purchased by one user as items suitable for other users who are similar to the user. However, this method suffers from the cold start problem, which makes optimization difficult when history information such as transaction history is insufficient.

For example, Non-Patent Literature Document 1 discloses a technique for transferring knowledge between models in order to reduce the impact of the cold start problem. In general, models for recommendation are specialized for a particular domain and the models are independent of each other. However, the document discloses an algorithm for transferring knowledge based on similarities between domains.

LISTING OF REFERENCES

NON-PATENT LITERATURE DOCUMENTS

Non-Patent Literature Document 1: Liu, B., Wei, Y., Zhang, Y., Yan, Z., Yang, Q.: Transferable contextual bandit for cross-domain recommendation. In: Proceedings of the AAAI Conference on Artificial Intelligence. vol. 32 (2018).URL:https://ojs.aaai.org/index.php/AAAI/article/view/11699

SUMMARY OF THE INVENTION

PROBLEMS TO BE SOLVED BY THE INVENTION

The method disclosed in the above document does not take into account the viewpoints of the recommendation target users, and there is a problem in that the impact of the cold start problem cannot be sufficiently reduced.

The present invention has been made in view of the above problem, and an object of the present invention is to provide a technique for reducing the impact of the cold start problem in machine learning.

SOLUTION TO THE PROBLEMS

To solve the above problem, one aspect of an information processing apparatus according to the present invention includes: an acquisition unit configured to acquire a content-to-content similarity that is a similarity between a target content and one or more pieces of other content, and a user-to-user similarity that is a similarity between a target user and one or more other users; an estimation unit configured to estimate a prior distribution of expected rewards obtained as a result of execution processing performed by the target user on the target content, based on the content-to-content similarity and the user-to-user similarity; and a derivation unit configured to derive a posterior distribution of the expected rewards, using the prior distribution.

In the information processing apparatus described above, the acquisition unit may acquire the content-to-content similarity, using features of the target content and the one or more pieces of other content, and acquire the user-to-user similarity, using features of the target user and the one or more other users.

In the information processing apparatus described above, the estimation unit may estimate the prior distribution, using a first reward obtained as a result of execution processing performed by the target user on the other content.

The first reward may be configured to be higher for recent actions than for past actions performed by the target user on the other content, due to a reward discount that is based on an elapse of time.

In the information processing apparatus described above, the estimation unit may estimate the prior distribution, using a second reward obtained as a result of execution processing performed by the other users on the target content.

The second reward may be configured to be higher for recent execution processing than for past execution processing performed by the other users on the target content, due to a reward discount that is based on an elapse of time.

The information processing apparatus described above may further include a determination unit configured to determine whether or not to provide the target content to the target user based on the posterior distribution of the expected rewards derived by the derivation unit.

Each piece of content may be an advertisement related to a tangible or intangible product or service, the execution processing may be advertisement display processing, and each reward may indicate presence or absence of a click on the advertisement.

To solve the above problem, another aspect of an information processing apparatus according to the present invention includes: an acquisition unit configured to acquire a similarity between a plurality of pieces of content and a similarity between a plurality of users; and a determination unit configured to determine, as suitable content for one or more users of the plurality of users, a piece of content with a highest expected reward, of the plurality of pieces of content, using the similarity between the plurality of pieces of content and the similarity between the plurality of users.

To solve the above problem, one aspect of an information processing method according to the present invention includes: an acquisition step of acquiring a content-to-content similarity that is a similarity between a target content and one or more pieces of other content, and a user-to-user similarity that is a similarity between a target user and one or more other users; an estimation step of estimating a prior distribution of expected rewards obtained as a result of execution processing performed by the target user on the target content, based on the content-to-content similarity and the user-to-user similarity; and a derivation step of deriving a posterior distribution of the expected rewards, using the prior distribution.

To solve the above problem, one aspect of a program according to the present invention is an information processing program for enabling a computer to perform information processing, the program enabling the computer to perform processing which includes: acquisition processing to acquire a content-to-content similarity that is a similarity between a target content and one or more pieces of other content, and a user-to-user similarity that is a similarity between a target user and one or more other users; an estimation processing to estimate a prior distribution of expected rewards obtained as a result of execution processing performed by the target user on the target content, based on the content-to-content similarity and the user-to-user similarity; and a derivation processing to derive a posterior distribution of the expected rewards, using the prior distribution.

To solve the above problem, another aspect of an information processing method according to the present invention includes: an acquisition step of acquiring a similarity between a plurality of pieces of content and a similarity between a plurality of users; and a determination step of determining, as suitable content for one or more users of the plurality of users, a piece of content with a highest expected reward, of the plurality of pieces of content, using the similarity between the plurality of pieces of content and the similarity between the plurality of users.

To solve the above problem, another aspect of a program according to the present invention is an information processing program for enabling a computer to perform information processing, the program enabling the computer to perform processing which includes: an acquisition processing to acquire a similarity between a plurality of pieces of content and a similarity between a plurality of users; and a determination processing to determine, as suitable content for one or more users of the plurality of users, a piece of content with a highest expected reward, of the plurality of pieces of content, using the similarity between the plurality of pieces of content and the similarity between the plurality of users.

To solve the above problem, one aspect of a learning model according to the present invention is formed so as to: based on a content-to-content similarity that is a similarity between a target content and one or more pieces of other content, and a user-to-user similarity that is a similarity between a target user and one or more other users, estimate a prior distribution of expected rewards obtained as a result of execution processing performed by the target user on the target content, and derive a posterior distribution of the expected rewards, using the prior distribution.

ADVANTAGEOUS EFFECTS OF THE INVENTION

According to the present invention, it is possible to reduce the impact of the cold start problem in machine learning.

BRIEF DESCRIPTION OF THE DRAWINGS

Fig. 1 shows an example of a configuration of an information processing system.
Fig. 2 shows an example of a functional configuration of an information processing apparatus 10.
Fig. 3 shows an algorithm for a learning model according to an embodiment.
Fig. 4 shows an example of a hardware configuration of the information processing apparatus 10 and a user device 11.
Fig. 5 shows a flowchart for processing that is performed by the information processing apparatus 10.
Fig. 6 shows an example of application of a learning model according to an embodiment.

DESCRIPTION OF EMBODIMENTS

Embodiments of the present invention will now be described in detail with reference to the accompanying drawings. Out of the component elements described below, elements with the same functions have been assigned the same reference numerals, and description thereof is omitted. Note that the embodiments disclosed below are mere example implementations of the present invention, and it is possible to make changes and modifications as appropriate according to the configuration and/or various conditions of the apparatus to which the present invention is to be applied. Accordingly, the present invention is not limited to the embodiments described below. The combination of features described in these embodiments may include features that are not essential when implementing the present invention.

Configuration of Information Processing System

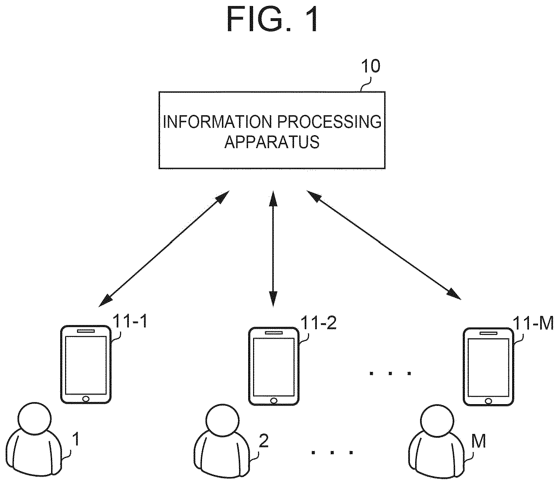

Fig. 1 shows an example of a configuration of an information processing system according to the present embodiment. As shown in Fig. 1, an example of the information processing system includes an information processing apparatus 10 and a plurality of user devices 11-1 to 11-M (M > 1) used by any number (a plurality) of users 1 to M. In the following description, the user devices 11-1 to 11-M may be collectively referred to as user devices 11 unless otherwise specified. Also, in the following description, the terms "user device" and "user" may be used interchangeably.
The user devices 11 are, for example, devices such as smartphones or tablets, and are each configured to be capable of communicating with the information processing apparatus 10 via a public network such as LTE (Long Term Evolution) or a wireless communication network such as a wireless LAN (Local Area Network). The user devices 11 each have a display unit (display surface) such as a liquid crystal display, and users 1 to N can perform various operations using a GUI (Graphic User Interface) provided on the liquid crystal display. The operations include various operations performed on pieces of content such as images displayed on the screen, examples of which include a tap operation, a slide operation, a scroll operation, and so on, which are performed using a finger, a stylus, or the like.
Note that the user devices 11 are not limited to the device in the mode shown in Fig. 1, and may be devices such as desktop PCs (Personal Computers) or laptop PCs. In such a case, operations by the users 1 to M can be performed using an input device such as a mouse or a keyboard. The user devices 11 may each have a separate display surface.
The information processing apparatus 10 provides the user devices 11 with content used to recommend items such as tangible or intangible products and services (for example, travel products), and each user device 11 is configured to be capable of displaying the content on the display unit of the user device 11. In the present embodiment, the information processing apparatus 10 provides the user devices 11 with images of advertisements (advertisement images, hereinafter simply referred to as advertisements) related to various items as content, and each user device 11 is configured to be capable of displaying the advertisements on the display unit of the user device 11. The information processing apparatus 10 provides various websites to provide the advertisements. Such various websites may be managed by the information processing apparatus 10 or by a server device (not shown). Such various websites may include, for example, e-commerce sites, restaurant reservation sites, hotel reservation sites, and so on.

Functional Configuration of Information Processing Apparatus 10

The information processing apparatus 10 can acquire attributes (information representing attributes) of the users 1 to M of the user devices 11-1 to 11M as user features. In addition, the information processing apparatus 10 can acquire a plurality of features related to advertisements to be provided, as advertisement features. The information processing apparatus 10 executes an algorithm for a learning model, which will be described later, using the acquired user features and the advertisement features, determines advertisements suitable for any one or more user devices of the user devices 11-1 to 11-M, and provides the advertisements to the one or more user devices. The learning model and processing performed using the learning model will be described later.

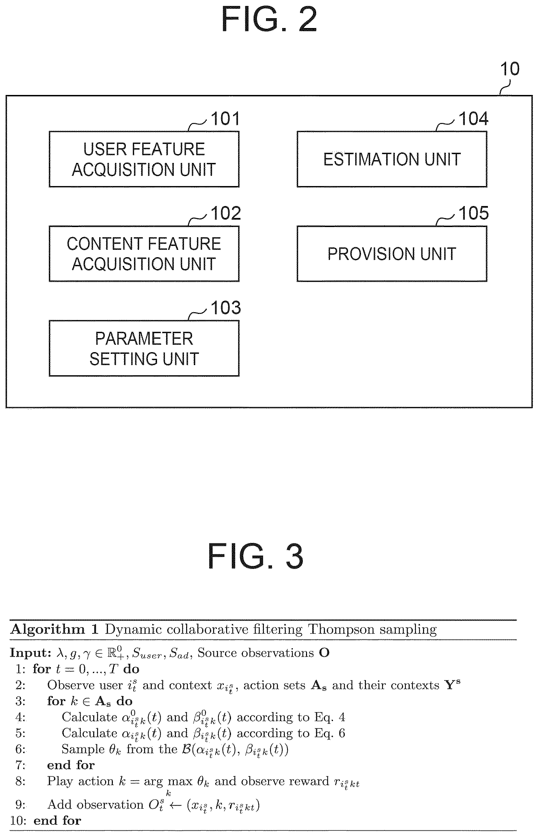

Fig. 2 shows an example of the functional configuration of the information processing apparatus 10 according to the present embodiment. The information processing apparatus 10 according to the present embodiment includes a user feature acquisition unit 101, a content feature acquisition unit 102, a parameter setting unit 103, an estimation unit 104, and a provision unit 105, as examples of functional components thereof.
The user feature acquisition unit 101 acquires the respective attributes of the users 1 to M of the user devices 11-1 to 11-M as user features. The user features include at least part of: demographic attributes such as sex, age, annual income, educational background, and place of residence; psychographic attributes such as hobbies and preferences; behavioral attributes such as past Internet search history, browsing history, and purchase history; and registered information or the like for specific applications.
The content feature acquisition unit 102 acquires the attributes of pieces of content (advertisements in the present embodiment) to be provided to the users, as content features. In the present embodiment, the pieces of content are advertisements, and the content features (the advertisement features) may include attributes of items to be advertised (tangible or intangible products and services (for example, travel products), and so on), features of images included in the advertisements, and so on.

The content feature acquisition unit 102 is configured to be capable of acquiring not only content features of pieces of content provided to users in the past, but also content features of pieces of content scheduled to be provided in the future.

The parameter setting unit 103 sets predetermined parameters necessary for the algorithm for the learning model executed by the estimation unit 104. The parameters will be described later. The parameters may be set by the information processing apparatus 10 in advance, or input by the operator of the information processing apparatus 10.

The estimation unit 104 executes the algorithm for the learning model according to the present embodiment, which will be described later, estimates expected rewards obtained from execution processing performed on pieces of contents, and estimates content suitable for a given user. In the present embodiment, the estimation unit 104 executes the algorithm for the learning model to estimate the expected rewards obtained by performing advertisement display processing, and determines suitable advertisements for display on any one or more user devices of the user devices 11-1 to 11-M. In addition, the estimation unit 104 can determine, for any piece of content, whether or not the content is suitable for a given user.

The provision unit 105 provides the advertisements determined by the estimation unit 104 to the user devices 11. As a result, the user devices 11 can display the provided advertisements on the display units thereof.

Algorithm for Learning Model

Next, an algorithm for the learning model according to the present embodiment will be described. The learning model according to the present embodiment is a model for a bandit algorithm. The bandit algorithm is known as a reinforcement learning algorithm and aims to maximize the cumulative reward. Specifically, the bandit algorithm aims to draw arms so as to maximize the expected reward by adjusting the balance between exploitation and exploration for the arms (the proportions of exploitation and exploration). In the field of reinforcement learning, the arms are generally referred to as actions, and the term "actions" will be used in the following description as well.

The algorithm for the learning model according to the present embodiment is characterized by transferring knowledge (reward) across multiple domains and multiple users. The algorithm employs display of advertisements as an action and aims to maximize the cumulative reward for displaying advertisements. Also, in the algorithm, each domain is a website that handles items such as tangible or intangible products and services (for example, travel products). For example, an e-commerce site, a restaurant reservation site, and a hotel reservation site each correspond to a different domain.

Unlike movies and products, advertisements are pieces of content that are created when a new marketing campaign is launched and removed when the campaign ends. Therefore, the ratio of newly created advertisements is higher than the ratio of newly created movies and products, so the cold start problem can be significant in the case of advertisements. In the present embodiment, a new learning model that is based on the well-known Thompson sampling strategy, which is one of the strategies for the bandit algorithm, will be described as a learning model to reduce the impact of the cold start problem. In the following, the algorithm for the learning model according to the present embodiment will be described using mathematical expressions.

First, N available sources are assumed. Each source corresponds to a widget that displays advertisements. Each widget is application software having the function of displaying small advertisements (for example, banner advertisements) on the screen of the display unit of a terminal device (corresponding to any of the user devices 11 in Fig. 1 in the present embodiment). In the present embodiment, it is assumed that a set of advertisements, consisting of a plurality of advertisements, are displayed based on each source. The plurality of advertisements may be configured to be switched and displayed at regular time intervals, or may be configured to be displayed using a carousel function. The carousel function is a function that enables a user to voluntarily perform an operation to switch between a plurality of advertisements to be displayed in one advertisement display frame.

Here, a set of advertisements in a given source s (the set of advertisements that can be displayed based on the source s) is denoted as $A_s$. M (M > 0) users each have $d_u$ ($d_u$ > 0) types of features, and a set representing the features of the M users (user feature set) is denoted as X. Therefore, X is represented by a matrix having a size of M $\times$ $d_u$. In addition, in source s, each of $K_s$ ($K_s$ > 0) advertisements has $d_a$ ($d_a$ > 0) types of features, and a set (advertisement feature set) representing the features of $K_s$ advertisements is denoted as $Y^s$. Therefore, $Y^s$ is represented by a matrix having a size of $K_s \times d_a$.

Furthermore, a user i in a source s at a time step t is denoted as a user $i_t^s$. The user features of the source s at the time step t:

$$x_{i_t^s} \in X$$

and the advertisement features of the source s at the time step t:

$$y_{a_t^s} \in Y^s$$

are observed.

The user references the advertisements in the source s at the time step t:

$$a_t^s \in A_s$$

and a reward

$$r_{i_t^s a_t^s t}$$

from the advertisements is observed. The reward represents an implicit reward indicating whether or not the user $i_t^s$ has clicked on the advertisement $a_t^s$ (the presence or absence of a click on the advertisement).

Therefore, the entire observation is denoted as

$$O_t^s = \left( x_{i_t^s}, y_{a_t^s}, r_{i_t^s a_t^s t} \right)$$

Note that it is possible to employ a configuration in which the reward corresponds to an index indicating whether or not the advertisement has been clicked and conversion (final achievement such as the purchase of a product or a request for information regarding the product) is reached.

The learning model according to the present embodiment aims to determine the advertisement $a_t^s$ to be displayed when the cumulative reward

$$\sum_{s}^{N} \sum_{t=0}^{T} r_{i_t^s a_t^s t}$$

is maximized. Here, T denotes the maximum value that the time step t can take. The maximization of the cumulative reward expectation value can be expressed as Equation (1) as an expression for minimizing the total regret of the user i.

[Math. 1]

$$\text{minimize } E[\text{regret}_i(T)] = \sum_{s=0}^{N} E\left[ max_{a_t^s \in A_s} \sum_{t=0}^{T} r_{i_t^s a_t^s t}^* - \sum_{t=0}^{T} r_{i_t^s a_t^s t} \right] \qquad (1)$$

where r* represents the reward that can be obtained by displaying (i.e., action) an advertisement that is suitable for the user $i_t^s$.

The learning model according to the present embodiment is a model for learning the policy applied in retrieving an advertisement from observations:

$$O = \{O^s\}_{s=1,\dots,N}$$

of all the sources s. The learning model according to the present embodiment also utilizes connections between sources to transfer knowledge between the sources (i.e., between advertisements) and between the users, respectively. As a result, the policy reflects more generalized behaviors of the users. The learning model according to the present embodiment transfers rewards as knowledge between the sources and between the users. The degree of reward transfer is based on the similarity between the features of one object and the features of the other object that is a target.

In the present embodiment, the degree of reward transfer between the users (i.e., similarity between the users) is expressed as Equation (2A) using cosine similarity.

[Math. 2A]

$$S_{user}(x_i, x_j) = \frac{x_i \cdot x_j}{|x_i||x_j|} \tag{2A}$$

where $x_i$ and $x_j$ respectively represent the user features of the user i and the user features of the user j. As described above, each user has $d_u$ types of features, and therefore $x_i$ may indicate a feature for each type. Alternatively, $x_i$ may be a feature vector generated from $d_u$ types of features. The same applies to $x_j$.

Similarly, the degree of reward transfer between the advertisements (i.e., similarity between the advertisements) is expressed as Equation (2B).

[Math. 2B]

$$S_{ad}(y_i, y_j) = \frac{y_i \cdot y_j}{|y_i||y_j|} \tag{2B}$$

where $y_i$ and $y_j$ respectively represent the advertisement features of the advertisement i and the advertisement features of the advertisement j. As described above, each advertisement has $d_a$ types of features, and therefore $y_i$ may indicate a feature for each type. Alternatively, $y_i$ may be a feature vector generated from $d_a$ types of features. The same applies to $y_j$.

Note that the advertisement i and advertisement j may be selected from the same domain or acquired from different domains. As described above, when the domain is a website that handles items such as tangible or intangible products and services (for example, travel products), the advertisement i may be an advertisement on an e-commerce site and the advertisement j may be an advertisement on a restaurant reservation site.

In real-world datasets, in particular, the number of users is huge, and it is difficult to calculate the similarity between all pairs of users. Therefore, in order to efficiently acquire the above-described similarities, a well-known locality sensitive hashing may be used at implementation.

As described above, the learning model according to the present embodiment is based on the Thompson sampling strategy. The Thompson sampling strategy is a method for selecting the arm with the highest score from among a plurality of sample scores expected based on the posterior distribution of arms in each round, derived based on the prior distribution, in order to draw the arm that maximizes the expected reward. In the case of Bernoulli bandit, the likelihood function is formulated using the Bernoulli distribution, and the prior distribution is represented as a natural conjugate prior using the beta distribution.

The beta distribution function can be expressed as Equation (3).

[Math. 3]

$$p(\theta_k) = \frac{\Gamma(\alpha_k + \beta_k)}{\Gamma(\alpha_k)\Gamma(\beta_k)} \theta_k^{\alpha_k - 1}(1 - \theta_k)^{\beta_k - 1} \tag{3}$$

where $\Gamma$ represents the gamma function. In view of the learning model according to the present embodiment, $\theta_k$ is the probability that the display of an advertisement k (i.e., action) results in a reward, and $\alpha_k$ and $\beta_k$ are parameters representing positive and negative rewards for the advertisement k, respectively.

In the original Thompson sampling, the case of a uniform distribution where $\alpha_k = 1$ and $\beta_k = 1$ is assumed, but the learning model according to the present embodiment employs historical data to estimate the prior distribution. Specifically, the user and advertisement similarity functions described above are used. As a result, it is possible to provide a better estimate of the prior distribution.

First, parameters representing the positive reward ($\alpha$) and negative reward ($\beta$) for prior estimation for the target user i and the target advertisement k at the time step t are formulated as shown in Equation (4) below.

[Math. 4]

$$\alpha_{ik}^0(t) = \sum_{l \neq k} S_{ad}(y_k, y_l) s_{il}(t) + \sum_{j \neq i} S_{user}(x_i, x_j) s_{jk}(t)$$

$$\beta_{ik}^0(t) = \sum_{l \neq k} S_{ad}(y_k, y_l) f_{il}(t) + \sum_{j \neq i} S_{user}(x_i, x_j) f_{jk}(t) \tag{4}$$

where sii(t) is a discount-aware cumulative positive reward, and is expressed as Equation (5A).
[Math. 5A]

$$s_{il}(t) = \sum_{\tau=0}^{t} \gamma^{t-\tau} s_{il\tau} \tag{5A}$$

In Equation (5A), $s_{il\tau}$ is a binary variable that is 1 if a reward for the target user i and another advertisement l is observed at time $\tau$, and 0 otherwise. $\gamma$ indicates a discount rate. The discount rate $\gamma$ is multiplied by a multiplier (t-$\tau$), and therefore the larger the time $\tau$ is and the closer the time $\tau$ is to the time t, the lower the discount rate is. That is to say, $s_{il}(t)$ corresponds to a change over time in the reward resulting from the user's behavior, and reflects the behaviors performed at points closer to the time t (i.e., recent behavior) more than the past behaviors of the user.

Similarly, $f_{jk}(t)$ is defined as the cumulative negative reward considering discounting that is based on $f_{jk\tau}$ and the discount rate $\gamma$ as shown in Equation (5B). Here, $f_{jk\tau}$ represents the number of failed recommendations, and is 1 if another user j viewed the target advertisement k at the time $\tau$ but did not click on the advertisement.
[Math. 5B]

$$f_{jk}(t) = \sum_{\tau=0}^{t} \gamma^{t-\tau} f_{jk\tau} \tag{5B}$$

In this way, the parameters representing the positive reward ($\alpha$) and the negative reward ($\beta$) for prior estimation of the target advertisement k for the target user i can be estimated based on the similarity between the users (similarity ($\Sigma S_{user}$) between the target user and one or more other users) and the similarity between the advertisements (the similarity ($\Sigma S_{ad}$) between the target advertisement and one or more other advertisements).

Therefore, the rewards are transferred based on the similarity between the users and the similarity between the advertisements. Also, since user preferences can change over time, the discount rate $\gamma$ is applied to the cumulative positive reward sii(t) to give a higher value to the reward based on the recent user behaviors. In the present embodiment, as shown in the above Equations (4), (5A), and (5B), the reward obtained by the execution processing (advertisement display) performed on the other advertisement l by the target user i and the reward obtained by the execution processing performed on the target advertisement k by another user j are discounted (or gradually decreased) as time elapses. Thereafter, the prior distribution is estimated using these discounted rewards. Setting the discount rate may be an option.

After the prior distribution is estimated, a posterior distribution is derived using the prior distribution. In the same manner as with the original Thompson sampling strategy, the posterior distribution is formulated based on the beta distribution. In the case of the original Thompson sampling strategy, the parameters for the posterior beta distribution obtained using a uniform prior distribution are $\alpha_k = s_k + 1$, $\beta_k = f_k + 1$.

In the present embodiment, the prior knowledge indicated by Equation (4) is used to formulate the parameters for the posterior beta distribution as shown in Equation (6).
[Math. 6]

$$\alpha_{ik}(t) = \lambda(s)\alpha_{ik}^0(t) + g s_k(t) + s_{ik}(t) + 1$$

$$\beta_{ik}(t) = \lambda(f)\beta_{ik}^0(t) + g f_k(t) + f_{ik}(t) + 1 \tag{6}$$

where $\lambda(s)$ and $\lambda(f)$ are hyperparameters that adjust the importance of the prior knowledge, and

$$\lambda(s) = \frac{\lambda}{s_{ik}(t) + 1}$$

$$\lambda(f) = \frac{\lambda}{f_{ik}(t) + 1}$$

are satisfied.

g is a hyperparameter that adjusts the global reward importance after rewards between users and between advertisements have been transferred.

As in the original Thompson sampling strategy, $s_k(t)$ and $f_k(t)$ are incorporated as average rewards of the users. This is because, in real-world cases, very few valid similar users occur and the interaction between users and advertisements is sparse. The last term "1" is a pseudo-count for avoiding errors when historical rewards are not available.

In this way, the algorithm for the learning model according to the present embodiment dynamically uses the user similarity and content similarity to perform inference based on the original Thompson sampling strategy, so that the algorithm can be referred to as the dynamic collaborative filtering Thompson sampling strategy.

Fig. 3 shows the algorithm (policy) for the learning model according to the present embodiment as Algorithm 1. This algorithm is executed by the estimation unit 104 of the information processing apparatus 10. The processing of the algorithm in Fig. 3 for any target user i will be described in order. Here, the processing steps 1 to 10 in Fig. 3 are denoted as S1 to S10.

First, the hyperparameters $\lambda$ and g, the discount rate $\gamma$, the similarity between users ($S_{user}$), and the similarity between advertisements ($S_{ad}$) are input. In addition, past observations O are input. Thereafter, the processing in S1 to S10 are performed.

S1: While the time step t is between 0 and T,

S2: observe user i's user features (the user contextual features), a set $A_s$ of advertisements (actions), and a set $Y_s$ of advertisement features thereof (advertisement contextual features) in the source s at the time step t.

S3: for all the advertisements k ($k \in A_s$) included in $A_s$,

S4: calculate the parameters representing the positive reward ($\alpha$) and the negative reward ($\beta$) for prior estimation for the user i and the advertisement k at the time step t according to Equation (4).
S5: calculate the parameters representing the positive reward ($\alpha$) and the negative reward ($\beta$) of the posterior beta distribution according to Equation (6).
S6: sample $\theta_k$ from the beta distribution using the parameters $\alpha$ and $\beta$ of the posterior beta distribution.

S7: end the loop of processing from S4 to S6.

S8: display the advertisement k that maximizes $\theta_k$ and observe the reward r.
S9: add observations O.

S10: end the loop of processing from S2 to S9.

In this way, by transferring rewards between a plurality of domains (a plurality of websites in the present embodiment) based on user similarity and advertisement similarity and repeating observations O, the display of advertisements suitable for the given user i can be continuously performed. In addition, with the transfer method, it is possible to evaluate rewards for new advertisements with less history information, and can reduce the impact of the cold start problem.

Note that the functions used for obtaining the prior and posterior distributions described above are not limited to the beta distribution function. For example, a Gaussian distribution function may also be used.

Hardware Configuration of Information Processing Apparatus 10

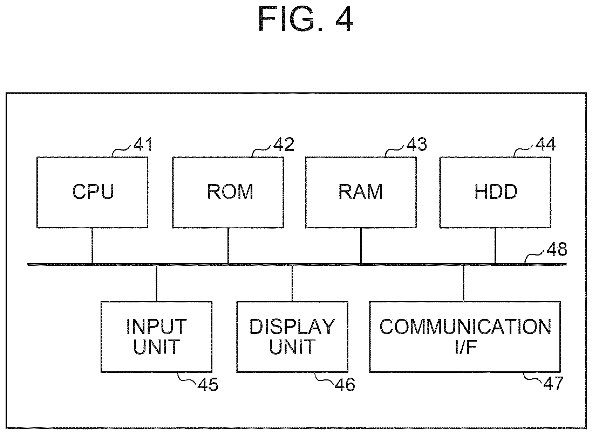

Fig. 4 is an example of a block diagram showing a hardware configuration of the information processing apparatus 10 according to the present embodiment.

The information processing apparatus 10 according to the present embodiment can be implemented on one or more computers of any type, one or more mobile devices of any type, and one or more other processing platforms of any type.

Although Fig. 4 shows an example in which the information processing apparatus 10 is implemented in a single computer, the information processing apparatus 10 according to the present embodiment may be mounted on a computer system that includes a plurality of computers. The plurality of computers may be connected to each other via a wired or wireless network so as to be able to communicate with each other.

As shown in Fig. 4, the information processing apparatus 10 may include a CPU 41, a ROM 42, a RAM 43, an HDD 44, an input unit 45, a display unit 46, a communication I/F 47, and a system bus 48. The information processing apparatus 10 may also be provided with an external memory.

The CPU (Central Processing Unit) 41 performs overall control on the operation of the information processing apparatus 10, and controls each of the components (42 to 47) via the system bus 48, which is a data transmission line.

The ROM (Read Only Memory) 42 is a non-volatile memory that stores a control program or the like required for the CPU 41 to perform processing. Note that the program may be stored in a non-volatile memory such as an HDD (Hard Disk Drive) 44 or an SSD (Solid State Drive), or an external memory such as a removable storage medium (not shown).

The RAM (Random Access Memory) 43 is a volatile memory and functions as a main memory, a work area, or the like of the CPU 51. That is to say, the CPU 41 loads a required program or the like from the ROM 42 into the RAM 43 when performing processing, and executes the program or the like to realize various functional operations.

The HDD 44 stores, for example, various kinds of data and various kinds of information required for the CPU 41 to perform processing using a program. Also, the HDD 44 stores, for example, various kinds of data and various kinds of information obtained as a result of the CPU 41 performing processing using a program or the like.

The input unit 45 is constituted by a keyboard or a pointing device such as a mouse.

The display unit 46 is constituted by a monitor such as a liquid crystal display (LCD). The display unit 56 may be configured in combination with the input unit 55 to function as a GUI (Graphical User Interface).

The communication I/F 47 is an interface that controls communication between the information processing apparatus 10 and external devices.

The communication I/F 47 provides an interface with the network and realizes communication with external devices via the network. Various kinds of data, various parameters, and so on are transmitted and received to and from external devices via the communication I/F 47. In the present embodiment, the communication I/F 47 may perform communication via a wired LAN (Local Area Network) that conforms to a communication standard such as Ethernet (registered trademark), or a dedicated line. However, the network that can be used in the present embodiment is not limited to these networks, and may be constituted by a wireless network. Examples of this wireless network include wireless PANs (Personal Area Networks) such as Bluetooth (registered trademark), ZigBee (registered trademark), and UWB (Ultra Wide Band). Examples of the wireless network also include wireless LAN (Local Area Networks) such as Wi-Fi (Wireless Fidelity) (registered trademark) and wireless MANs (Metropolitan Area Networks) such as WiMAX (registered trademark). Furthermore, the examples include wireless WANs (Wide Area Networks) such as LTE/3G, 4G, and 5G. The network need only be able to connect devices so as to be able to communicate with each other, and the communication standard, the scale, and the configuration thereof are not limited to the above examples.

At least some of the functions of the constituent elements of the information processing apparatus 10 shown in Fig. 4 can be realized by the CPU 41 executing a program. However, at least some of the functions of the constituent elements of the information processing apparatus 10 shown in Fig. 4 may be configured to operate as dedicated hardware. In this case, the dedicated hardware operates under the control of the CPU 41.

Hardware Configuration of User Devices 11

The hardware configuration of each user device 11 shown in Fig. 1 may be the same as that shown in Fig. 4. That is to say, each user device 11 may include a CPU 41, a ROM 42, a RAM 43, an HDD 44, an input unit 45, a display unit 46, a communication I/F 47, and a system bus 48. Each user device 11 can display various kinds of information provided by the information processing apparatus 10 on the display unit 46, and perform processing corresponding to an input operation received from the user 1 via a GUI (a component constituted by the input unit 45 and the display unit 46).

Processing Flow

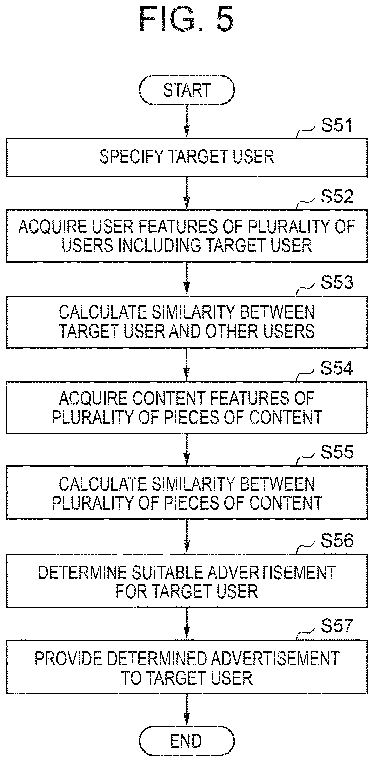

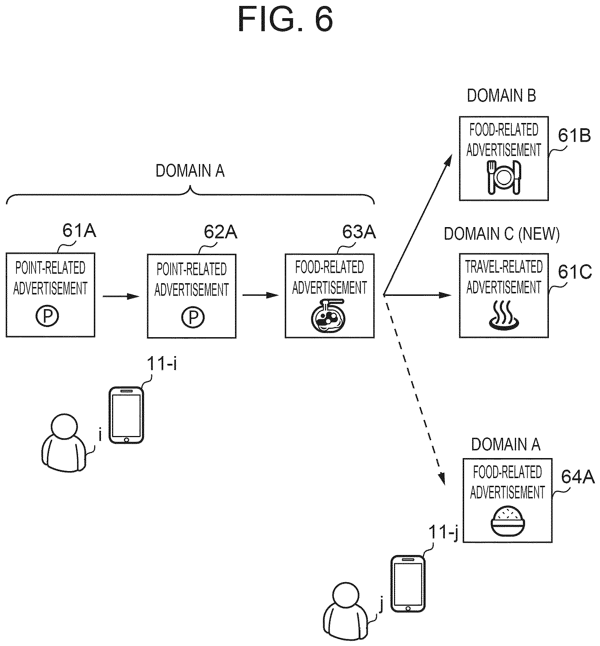

Fig. 5 shows a flowchart of processing that is performed by the information processing apparatus 10 according to the present embodiment. The processing shown in Fig. 5 can be realized by the CPU 41 of the information processing apparatus 10 loading a program stored in the ROM 42 or the like into the RAM 43 and executing the program. The processing shown in Fig. 5 will be described along with the application example shown in Fig. 6. Fig. 6 shows an application example to which the learning model according to the present embodiment is applied, with reference to the information processing system shown in Fig. 1.

In S51, the user feature acquisition unit 101 specifies users (target users) to which advertisements are to be provided. The user feature acquisition unit 101 can specify, as the target users, not only users who have already been provided with advertisements, but also new users who have not been provided with advertisements.

**EP 4 322 097 A1**

In the example in Fig. 6, the user feature acquisition unit 101 specifies, as a target user, the user i of the users 1 to M, who have already been provided with advertisements.

In S52, the user feature acquisition unit 101 acquires the user features of a plurality of users (the user 1 to M) including the target user. The user features include attributes that may change over time, such as past Internet search history, and therefore, the user feature acquisition unit 101 may acquire user features periodically or at any time.

In S53, the user feature acquisition unit 101 calculates the similarity ($S_{user}$) between the target user and users other than the target user, using the user features acquired in S52. The processing in S53 corresponds to the processing of Equation (2A) described above.

In S54, the content feature acquisition unit 102 acquires the features of the advertisements as content. In S54, the content feature acquisition unit 102 acquires the features of a plurality of advertisements on a plurality of websites. In addition, the content feature acquisition unit 102 can also acquire the features of advertisements that are newly created and not yet provided to any user.

In the example of Fig. 6, the content feature acquisition unit 102 acquires the features of advertisements in a domain A (for example, an electronic commerce site) and the features of advertisements in a domain B (for example, a restaurant reservation site). Furthermore, the content feature acquisition unit 102 acquires the features of advertisements in a domain C (for example, a hotel reservation site) that are newly created and have not been provided to users. The advertisements in the domain C are new advertisements and have not been provided to users. Therefore, no historical information regarding the advertisements in the domain C has been accumulated.

In S55, the content feature acquisition unit 102 calculates the similarity ($S_{ad}$) between a plurality of pieces of content (between advertisements in this example). The processing in S55 corresponds to the processing of Equation (2B) described above.

In the example in Fig. 6, a similarity is calculated between the features of any combinations of two advertisements, of the features of the advertisements in the domain A, the features of the advertisements in the domain B, and the features of the advertisements in the domain C.

Note that the order of the processing in S51 to S55 is not limited to the order shown in Fig. 5.

In S56, the estimation unit 104 determines content suitable for the target user by estimation. First, in order to execute Algorithm 1, the estimation unit 104 acquires the hyperparameters $\lambda$ and g and the discount rate $\gamma$ from the parameter setting unit 103, and acquires the similarity ($S_{user}$) between users and similarity between advertisements ($S_{ad}$) from the user feature acquisition unit 101 and the content feature acquisition unit 102, respectively. Next, the estimation unit 104 sets the user i to the target user, and executes Algorithm 1 on the user i. Thus, the estimation unit 104 determines advertisements suitable for the target user.

Note that the estimation unit 104 may determine whether or not to provide each of the advertisements processed in S56 to the target user, based on the obtained expected rewards.

In the example in Fig. 6, the user i was interested in clicking on point-related advertisements (advertisements 61A and 62A) on an e-commerce site (in the domain A) to earn points. Recently, user i became interested in eating delicious food and began clicking on a food-related advertisement (an advertisement 63A) in the domain A. Thus, the user i's preferences may change over time. Such dynamic behavior by the user i is reflected to $s_{il}(t)$ in Algorithm 1. That is to say, the parameters of the positive reward ($\alpha$) in the prior distribution are determined so that recent behavior is valued more than past behavior. Therefore, as the food-related advertisement (the advertisement 63A) is clicked in the domain A, the estimation unit 104 gives a higher reward expectation value to the advertisement whose features are more similar to the advertisement 63A than to the advertisements 61A and 62A. (Equation (1)). In the example in Fig. 6, a high reward expectation value is given to the food-related advertisement (the advertisement 61B) in the domain B (the restaurant reservation site) and a travel-related advertisement (an advertisement 61C) in the domain C (the hotel reservation site). The advertisement in the domain C has not been provided to users, and therefore no historical information regarding that domain has been accumulated. However, by using the similarity between advertisements and the similarity between users, it is possible to use estimated rewards. Ultimately, the estimation unit 104 can determine the advertisements 61B and 61C as suitable advertisements for the user i.

In S57, the provision unit 105 provides the advertisements determined in S56 to the target user. In the example in Fig. 6, the provision unit 105 provides the advertisements 61B and 61C to the user i. That is to say, the provision unit 105 performs control to display the advertisements 61B and 61C on the display unit of the user device 11-i.

In the above description, an example in which the user i is specified as the target user in S51 has been described with reference to Fig. 6. Next, an example in which the user j is specified will be described. In this example, it is assumed that the user j has user features similar to those of the user i. In this case, by executing the above algorithm, the estimation unit 104 can determine an advertisement similar to an advertisement suitable for the user i as an advertisement suitable for the user j. In the example in Fig. 6, the estimation unit 104 can determine the advertisement 64A in the domain A as an advertisement suitable for the user j, and the provision unit 105 can provide the advertisement 64A to the user j.

In this way, even if there is little or no prior history information regarding content (advertisements) and users, it is possible to estimate and determine content suitable for a given user by using the similarity between pieces of content and the similarity between the users.

Other Embodiments

Although the above embodiment has been described using advertisements as content, the present embodiment is applicable to any types of content. For example, movies, books, or various products may be used as content.

In addition, the above embodiment has been described based on the premise of a content recommendation system. However, the learning model according to the present embodiment, which transfers rewards between a plurality of domains and transfers rewards between targets to which a service is to be provided (for example, users), is applicable to any types of fields. For example, in the field of finance, the learning model according to the present embodiment can be applied to select the optimal portfolio for a customer from a plurality of portfolios. Also, in the field of healthcare, the learning model according to the present embodiment can be applied to provide treatment methods and medicines to a patient. Also, in the field of a dialog system, the learning model according to the present embodiment can be applied to build a system with a conversation agent, i.e., to build one system by integrating a plurality of conversation systems (each corresponding to a domain).

Note that although a specific embodiment has been described above, the embodiment is a mere example and is not intended to limit the scope of the invention. The apparatus and method described in this specification may be implemented in forms aside from the embodiment described above. It is also possible to appropriately make omissions, substitutions, and modifications to the embodiment described above without departing from the scope of the invention. Implementations with such omissions, substitutions, and modifications are included in the scope of the patent claims and their equivalents, and belong to the technical scope of the present invention.

REFERENCE NUMERALS AND SYMBOLS

| | |
|---|---|
| 1 to N: | User |
| 10: | Information processing apparatus |
| 11-1 to 11-M: | User device |
| 101: | User feature acquisition unit |
| 102: | Content feature acquisition unit |
| 103: | Parameter setting unit |
| 104: | Estimation unit |
| 105: | Provision unit |

**Claims**

1. An information processing apparatus comprising:

    an acquisition unit configured to acquire a content-to-content similarity that is a similarity between a target content and one or more pieces of other content, and a user-to-user similarity that is a similarity between a target user and one or more other users;
    an estimation unit configured to estimate a prior distribution of expected rewards obtained as a result of execution processing performed by the target user on the target content, based on the content-to-content similarity and the user-to-user similarity; and
    a derivation unit configured to derive a posterior distribution of the expected rewards, using the prior distribution.

2. An information processing apparatus according to claim 1,
    wherein the acquisition unit acquires the content-to-content similarity, using features of the target content and the one or more pieces of other content, and acquires the user-to-user similarity, using features of the target user and the one or more other users.

3. The information processing apparatus according to claim 1 or 2,
    wherein the estimation unit estimates the prior distribution, using a first reward obtained as a result of execution processing performed by the target user on the other content.

4. The information processing apparatus according to claim 3,

wherein the first reward is configured to be higher for recent actions than for past actions performed by the target user on the other content, due to a reward discount that is based on an elapse of time.

5. The information processing apparatus according to any one of claims 1 to 4,
wherein the estimation unit estimates the prior distribution, using a second reward obtained as a result of execution processing performed by the other users on the target content.

6. The information processing apparatus according to claim 5,
wherein the second reward is configured to be higher for recent execution processing than for past execution processing performed by the other users on the target content, due to a reward discount that is based on an elapse of time.

7. The information processing apparatus according to any one of claims 1 to 6, further comprising
a determination unit configured to determine whether or not to provide the target content to the target user based on the posterior distribution of the expected rewards derived by the derivation unit.

8. The information processing apparatus according to any one of claims 1 to 7,
wherein each piece of content is an advertisement related to a tangible or intangible product or service, the execution processing is advertisement display processing, and each reward indicates presence or absence of a click on the advertisement.

9. An information processing apparatus comprising:

   an acquisition unit configured to acquire a similarity between a plurality of pieces of content and a similarity between a plurality of users; and
   a determination unit configured to determine, as suitable content for one or more users of the plurality of users, a piece of content with a highest expected reward, of the plurality of pieces of content, using the similarity between the plurality of pieces of content and the similarity between the plurality of users.

10. An information processing method comprising:

   an acquisition step of acquiring a content-to-content similarity that is a similarity between a target content and one or more pieces of other content, and a user-to-user similarity that is a similarity between a target user and one or more other users;
   an estimation step of estimating a prior distribution of expected rewards obtained as a result of execution processing performed by the target user on the target content, based on the content-to-content similarity and the user-to-user similarity; and
   a derivation step of deriving a posterior distribution of the expected rewards, using the prior distribution.

11. An information processing program for enabling a computer to perform information processing, the program enabling the computer to perform processing comprising:

   acquisition processing to acquire a content-to-content similarity that is a similarity between a target content and one or more pieces of other content, and a user-to-user similarity that is a similarity between a target user and one or more other users;
   an estimation processing to estimate a prior distribution of expected rewards obtained as a result of execution processing performed by the target user on the target content, based on the content-to-content similarity and the user-to-user similarity; and
   a derivation processing to derive a posterior distribution of the expected rewards, using the prior distribution.

12. An information processing method comprising:

   an acquisition step of acquiring a similarity between a plurality of pieces of content and a similarity between a plurality of users; and
   a determination step of determining, as suitable content for one or more users of the plurality of users, a piece of content with a highest expected reward, of the plurality of pieces of content, using the similarity between the plurality of pieces of content and the similarity between the plurality of users.

**13.** An information processing program for enabling a computer to perform information processing, the program enabling the computer to perform processing comprising:

an acquisition processing to acquire a similarity between a plurality of pieces of content and a similarity between a plurality of users; and
a determination processing to determine, as suitable content for one or more users of the plurality of users, a piece of content with a highest expected reward, of the plurality of pieces of content, using the similarity between the plurality of pieces of content and the similarity between the plurality of users.

**14.** A learning model that is formed so as to:

based on a content-to-content similarity that is a similarity between a target content and one or more pieces of other content, and a user-to-user similarity that is a similarity between a target user and one or more other users, estimate a prior distribution of expected rewards obtained as a result of execution processing performed by the target user on the target content, and
derive a posterior distribution of the expected rewards, using the prior distribution.

# FIG. 1

10

INFORMATION PROCESSING
APPARATUS

11-1      11-2      11-M

. . .

1      2   . . .   M

# FIG. 2

10

```
┌─────────────────────────────────────────────────────────────┐
│                                                               │
│   ┌─────────101─────┐              ┌─────────104─────┐        │
│   │  USER FEATURE   │              │ ESTIMATION UNIT │        │
│   │ ACQUISITION UNIT│              │                 │        │
│   └─────────────────┘              └─────────────────┘        │
│                                                               │
│   ┌─────────102─────┐              ┌─────────105─────┐        │
│   │ CONTENT FEATURE │              │ PROVISION UNIT  │        │
│   │ ACQUISITION UNIT│              │                 │        │
│   └─────────────────┘              └─────────────────┘        │
│                                                               │
│   ┌─────────103─────┐                                         │
│   │   PARAMETER     │                                         │
│   │  SETTING UNIT   │                                         │
│   └─────────────────┘                                         │
│                                                               │
└─────────────────────────────────────────────────────────────┘
```

# FIG. 3

---

**Algorithm 1** Dynamic collaborative filtering Thompson sampling

---

**Input:** $\lambda, g, \gamma \in \mathbb{R}_+^0, S_{user}, S_{ad}$, Source observations $\mathbf{O}$

1:  **for** $t = 0, ..., T$ **do**
2:      Observe user $i_t^s$ and context $x_{i_t^s}$, action sets $\mathbf{A_s}$ and their contexts $\mathbf{Y^s}$
3:      **for** $k \in \mathbf{A_s}$ **do**
4:          Calculate $\alpha_{i_t^s k}^0(t)$ and $\beta_{i_t^s k}^0(t)$ according to Eq. 4
5:          Calculate $\alpha_{i_t^s k}(t)$ and $\beta_{i_t^s k}(t)$ according to Eq. 6
6:          Sample $\theta_k$ from the $\mathcal{B}(\alpha_{i_t^s k}(t), \beta_{i_t^s k}(t))$
7:      **end for**
8:      Play action $k = \arg\max_k \theta_k$ and observe reward $r_{i_t^s kt}$
9:      Add observation $O_t^s \leftarrow (x_{i_t^s}, k, r_{i_t^s kt})$
10: **end for**

---

# FIG. 4

| 41 | 42 | 43 | 44 |
|----|----|----|----|
| CPU | ROM | RAM | HDD |

48

| INPUT UNIT | DISPLAY UNIT | COMMUNICATION I/F |
|------------|--------------|-------------------|
| 45 | 46 | 47 |

# FIG. 5

```
        ( START )
            │
            ▼              ⌇ S51
┌──────────────────────────────┐
│     SPECIFY TARGET USER       │
└──────────────────────────────┘
            │
            ▼              ⌇ S52
┌──────────────────────────────┐
│ ACQUIRE USER FEATURES OF      │
│ PLURALITY OF USERS INCLUDING  │
│ TARGET USER                   │
└──────────────────────────────┘
            │
            ▼              ⌇ S53
┌──────────────────────────────┐
│ CALCULATE SIMILARITY BETWEEN  │
│ TARGET USER AND OTHER USERS   │
└──────────────────────────────┘
            │
            ▼              ⌇ S54
┌──────────────────────────────┐
│ ACQUIRE CONTENT FEATURES OF   │
│ PLURALITY OF PIECES OF CONTENT│
└──────────────────────────────┘
            │
            ▼              ⌇ S55
┌──────────────────────────────┐
│ CALCULATE SIMILARITY BETWEEN  │
│ PLURALITY OF PIECES OF CONTENT│
└──────────────────────────────┘
            │
            ▼              ⌇ S56
┌──────────────────────────────┐
│ DETERMINE SUITABLE            │
│ ADVERTISEMENT FOR TARGET USER │
└──────────────────────────────┘
            │
            ▼              ⌇ S57
┌──────────────────────────────┐
│ PROVIDE DETERMINED            │
│ ADVERTISEMENT TO TARGET USER  │
└──────────────────────────────┘
            │
            ▼
        (  END  )
```

# FIG. 6

DOMAIN B

FOOD-RELATED
ADVERTISEMENT — 61B

DOMAIN A

61A

POINT-RELATED
ADVERTISEMENT
Ⓟ

62A

POINT-RELATED
ADVERTISEMENT
Ⓟ

63A

FOOD-RELATED
ADVERTISEMENT

DOMAIN C (NEW)

TRAVEL-RELATED
ADVERTISEMENT — 61C

11-i
i

DOMAIN A

FOOD-RELATED
ADVERTISEMENT — 64A

11-j
j

## INTERNATIONAL SEARCH REPORT

| International application No. |
| --- |
| **PCT/JP2022/005602** |

**A.     CLASSIFICATION OF SUBJECT MATTER**

*G06Q 30/02*(2012.01)i
FI:    G06Q30/02 398

According to International Patent Classification (IPC) or to both national classification and IPC

**B.      FIELDS SEARCHED**

Minimum documentation searched (classification system followed by classification symbols)

G06Q10/00-99/00; G06F16/00-16/958

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
| --- | --- | --- |
| A | US 2017/0061481 A1 (STAPLES, INC.) 02 March 2017 (2017-03-02)<br>entire text, all drawings | 1-14 |
| A | US 2018/0211303 A1 (WAL-MART STORES, INC.) 26 July 2018 (2018-07-26)<br>entire text, all drawings | 1-14 |
| A | US 2017/0278114 A1 (XEROX CORP.) 28 September 2017 (2017-09-28)<br>entire text, all drawings | 1-14 |
| A | US 2017/0098236 A1 (YAHOO! INC.) 06 April 2017 (2017-04-06)<br>entire text, all drawings | 1-14 |
| A | US 2019/0080348 A1 (YAHOO HOLDINGS, INC.) 14 March 2019 (2019-03-14)<br>entire text, all drawings | 1-14 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 May 2022** | **17 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/005602**

| Patent document cited in search report | | | Publication date (day/month/year) | Patent family member(s) | Publication date (day/month/year) |
|---|---|---|---|---|---|
| US | 2017/0061481 | A1 | 02 March 2017 | CA 2940205 A1 entire text, all drawings | |
| US | 2018/0211303 | A1 | 26 July 2018 | (Family: none) | |
| US | 2017/0278114 | A1 | 28 September 2017 | (Family: none) | |
| US | 2017/0098236 | A1 | 06 April 2017 | (Family: none) | |
| US | 2019/0080348 | A1 | 14 March 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **LIU, B. ; WEI, Y. ; ZHANG, Y. ; YAN, Z. ; YANG, Q.** Transferable contextual bandit for cross-domain recommendation. *Proceedings of the AAAI Conference on Artificial Intelligence,* 2018, vol. 32, https://ojs.aaai.org/index.php/AAAI/article/view/11699